**Europäisches Patentamt**

**European Patent Office**

**Office européen des brevets**

(19)

(11) Veröffentlichungsnummer: **0 277 584**
**B1**

(12) ## EUROPÄISCHE PATENTSCHRIFT

(45) Veröffentlichungstag der Patentschrift:
**19.12.90**

(51) Int. Cl.⁵: **F16K 11/074**

(21) Anmeldenummer: **88101125.8**

(22) Anmeldetag: **27.01.88**

(54) Mischbatterie.

(30) Priorität: **04.02.87 DE 3703239**

(43) Veröffentlichungstag der Anmeldung:
**10.08.88 Patentblatt 88/32**

(45) Bekanntmachung des Hinweises auf die Patenterteilung:
**19.12.90 Patentblatt 90/51**

(84) Benannte Vertragsstaaten:
**AT BE CH DE ES FR GB GR IT LI NL**

(56) Entgegenhaltungen:
**DE-A- 2 509 649**
**DE-A- 2 741 832**
**DE-A- 3 440 607**
**DE-B- 1 550 060**
**FR-A- 2 465 141**
**FR-A- 2 480 392**

(73) Patentinhaber: **IDEAL-STANDARD GMBH, Euskirchener Strasse 80, D-5300 Bonn 1(DE)**

(72) Erfinder: **Burkard, Bernhard, Moselstrasse 46, D-5599 Bremm/Rheinland Pfalz(DE)**

(74) Vertreter: **Puchberger, Georg, Dipl.-Ing., Patentanwälte Dipl.-Ing. Georg Puchberger Dipl.-Ing. Rolf Puchberger Dipl.-Ing. Peter Puchberger Singerstrasse 13 Postfach 55, A-1010 Wien(AT)**

**Beschreibung**

Die Erfindung betrifft eine sanitäre Mischbatterie gemäß dem Oberbegriff des Anspruches 1.

Eine derartige Mischbatterie ist aus der DE-A 3 509 649 bekannt.

Bei einer derartigen Mischbatterie ist nachteilig, daß das Wasserventil für die Haushaltsmaschine an der Unterseite des Einsatzstükkes zwischen den Anschlußröhrchen für das kalte und warme Wasser sowie gegebenenfalls einem Anschlußröhrchen für das Mischwasser angeordnet ist, was relativ platzraubend ist.

Der Erfindung liegt die Aufgabe zugrunde, diesen Nachteil zu beseitigen und eine Mischbatterie der eingangs genannten Art zu schaffen, die einfach im Aufbau und sicher in der Wirkungsweise ist.

Gelöst wird diese Aufgabe dadurch, daß das Wasserventil zwischen der Mischkartusche und dem Einsatzstück angeordnet ist und mit einer oberen feststehenden Scheibe, einer unteren feststehenden Scheibe und einer mittleren beweglichen Scheibe, durch die in Verbindung mit einem zusätzlichen Durchgang in der unteren feststehenden Scheibe die Steuerung der Zufuhr zu der Haushaltsmaschine erfolgt, versehen ist.

Bevorzugte Ausführungsbeispiele sind in den Unteransprüchen gekennzeichnet.

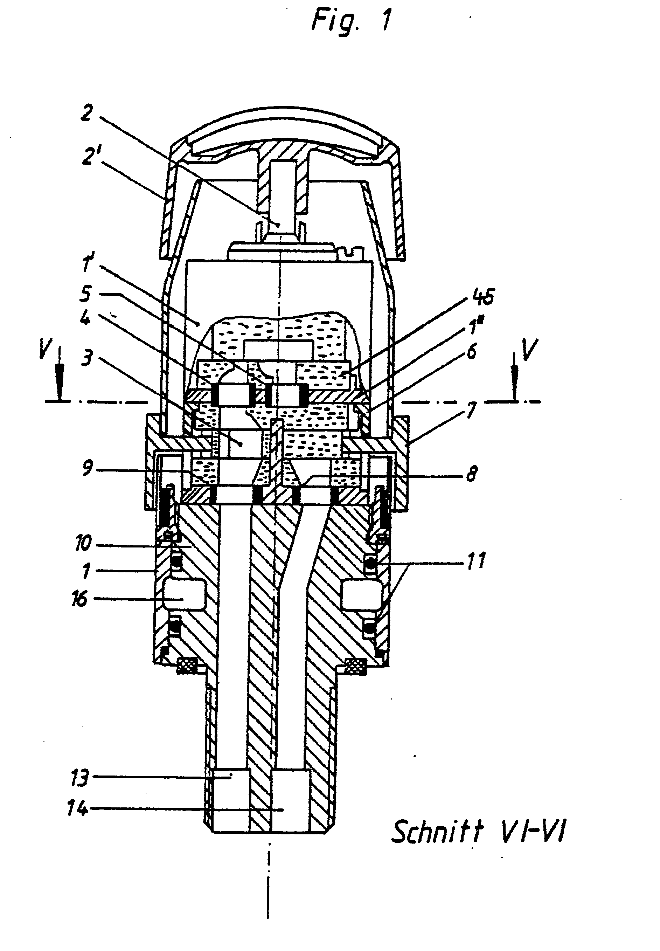

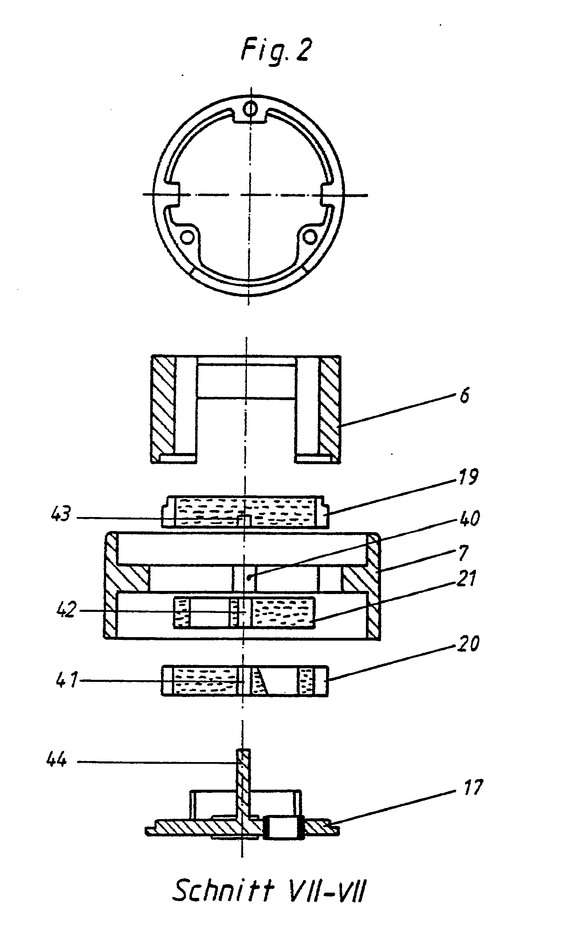

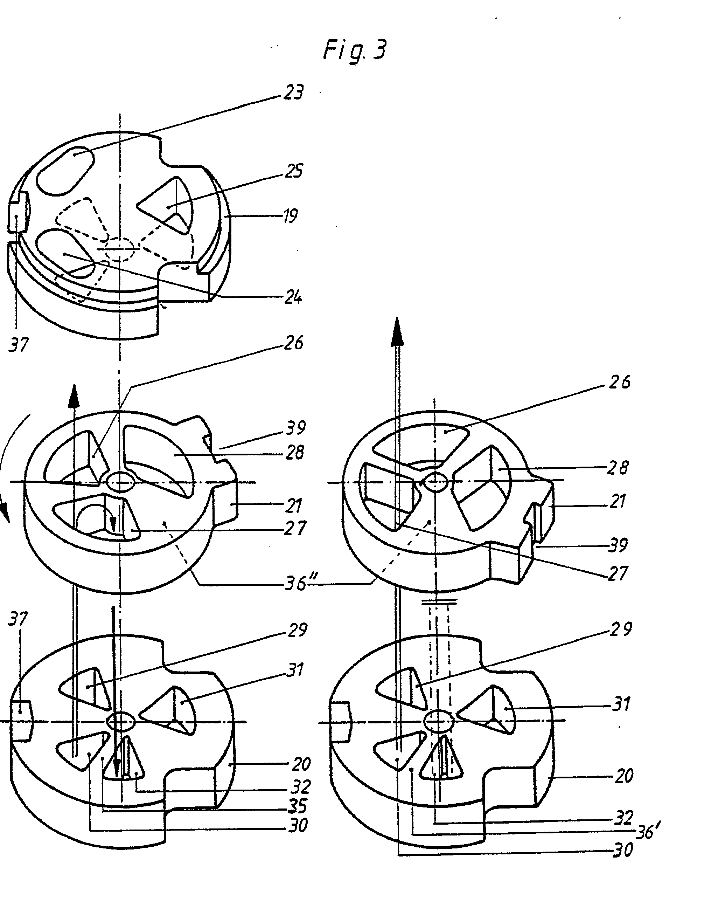

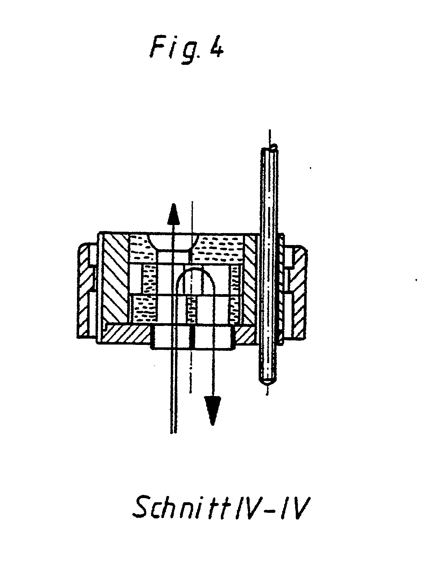

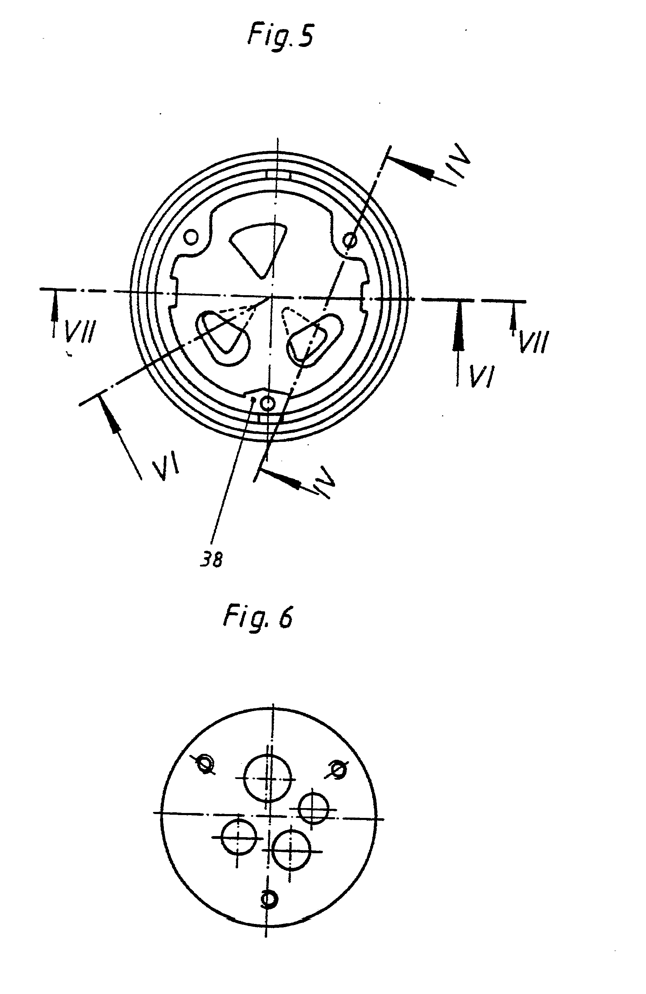

In der Zeichnung ist der Erfindungsgegenstand in einem Ausführungsbeispiel dargestellt, und zwar zeigen: Fig.1 eine Einhebelmischbatterie im Längsschnitt, Fig.2 eine Explosionszeichnung gemäß Fig.1 in einer Stellung der beweglichen Scheibe, in der der zusätzliche Durchhang in der unteren, feststehenden Scheibe geschlossen ist, Fig.3 eine Explosionszeichnung der Scheiben des Wasserventiles in einer Stellung der beweglichen Scheibe, in der der zusätzliche Durchgang geöffnet ist, und die bewegliche Scheibe in der Stellung, in der der zusätzliche Durchgang geschlossen ist, Fig.4 das Wasserventil im Längsschnitt gemäß der Linie IV-IV der Fig.5 mit geöffnetem Anschluß für die Haushaltsmaschine, Fig.5 eine Draufsicht auf das Wasserventil gemäß der Linie V-V der Fig.1, Fig.6 ein Lochbild des Einsatzstückes.

Die in Fig.1 gezeigte Mischbatterie ist mit einem Gehäuse 1 und mit einer bekannten Mischkartusche 1' z.B. gemäß der DE-B 1 550 060 ausgestattet.

Die Mischkartusche 1' ist mit einem Steuerhebel 2 zur Aufnahme eines Griffhebels 2' versehen. Unter der Mischkartusche 1' befindet sich ein sanitäres Wasserventil 3, welches gegenüber der Mischkartusche 1' mittels eines nicht gezeigten Dichtringes für das kalte, eines Dichtringes 4 für das warme Wasser und eines Dichtringes 5 für das Mischwasser abgedichtet ist. Das Wasserventil 3 ist als Kartusche 6 ausgebildet. In den Kartuschen 1', 6 befinden sich keramische Dichtscheiben. Für die Bedienung des Wasserventiles 3 ist ein Drehring 7 vorgesehen. An der Unterseite des Wasserventiles 3 befindet sich ein Dichtring 8 für das kalte Wasser, ein Dichtring 9 für das warme Wasser sowie ein nicht gezeigter Dichtring für das Mischwasser.

Unter dem Wasserventil 3 ist ein Einsatzstück 10 angeordnet, welches gegenüber dem Gehäuse 1 mit Dichtringen 11 abgedichtet ist.

An dem Einsatzstück 10 befindet sich ein nicht gezeigtes Anschlußröhrchen 12 für das kalte Wasser, ein Anschlußröhrchen 13 für das warme Wasser und ein Anschlußröhrchen 14 für einen Anschluß an eine Haushaltsmaschine. Das Einsatzstück 10 ist ferner mit einem Mischwasserauslauf 16 versehen, von dem das Wasser in einen nicht gezeigten Auslauf der Mischbatterie strömt.

Fig.2 zeigt das Kartuschengehäuse 6 mit einem Kartuschenboden 17; dieser Kartuschenboden 17 ist durch Ultraschallschweißung an dem Gehäuse 6 befestigt. Innerhalb des Wasserventiles 3 ist eine obere feststehende keramische Scheibe 19, eine untere feststehende keramische Scheibe 20 sowie eine mittlere bewegliche keramische Scheibe 21 angeordnet; die Scheiben 19, 20, 21 sind mit Axialspiel in dem Kartuschengehäuse 6 angeordnet. Die gegenseitige dichte Anlage der Scheiben 19, 20, 21 ist durch die Vorspannung der Dichtringe zwischen dem Wasserventil und der Mischkartusche sowie zwischen dem Wasserventil und dem Einsatzstück sichergestellt. Dabei ist für das Öffnen und Schließen des Maschinenanschlusses der Drehring 7 vorgesehen, der an die mittlere bewegliche Scheibe 21 angreift.

Die Darstellungen in den Fig. 2 und 3 zeigen die Scheiben 19 bis 21 des sanitären Wasserventils; dabei ist die Anordnung und Ausführung der oberen Scheibe 19, der unteren Scheibe 20 und der mittleren Scheibe 21 im Detail gezeigt. Die obere Scheibe 19 ist mit einem Durchgang 23 für das warme Wasser, einem Durchgang 24 für das kalte Wasser und einem Durchgang 25 für das Mischwasser versehen. Die mittlere Scheibe 21 ist mit einem großen Durchgang 26 für das warme Wasser, einem grossen Durchgang 27 für das kalte Wasser und einem großen Durchgang 28 für das Mischwasser ausgestattet. Die untere Scheibe 20 weist einen Durchgang 29 für das warme Wasser, einen Durchgang 30 für das kalte Wasser, einen Durchgang 31 für das Mischwasser und einen weiteren Kaltwasser-Durchgang 32 für den Maschinenanschluß auf. Alle Durchgänge 23 bis 32 sind etwa kreissegmentförmig oder dreieckig gestaltet. Die mittlere Scheibe 21 ist gemäß Fig.3 in einer Stellung gezeigt, in der durch den unteren Dichtflächenbereich 36" der Durchgang 32 zur Haushaltsmaschine durch Verdrehen der Scheibe in Pfeilrichtung nicht verschlossen ist. Die Durchgänge 23, 24, 25, 29, 30, 31 sind so übereinander angeordnet und dimensioniert, daß sie durch eine Betätigung der mittleren Scheibe 21 zum Öffnen und Schließen des Anschlusses für die Haushaltsmaschine nicht beeinflußt werden. Für das Öffnen bzw. Schließen des Anschlusses für die Haushaltsmaschine durch Verdrehen der mittleren Scheibe 21 wird also lediglich der Durchgang 32 geöffnet bzw. geschlossen, während die Durchgänge für den Betrieb der Einhebelmischbatterie unberührt bleiben.

Die Darstellung gemäß Fig.3 zeigt ferner die mittlere Scheibe 21 in entgegengesetzter Pfeilrichtung verdreht. Dabei verdeckt der Dichtflächenbereich 36" den Durchgang 32, so daß der Anschluß für die Haushaltsmaschine geschlossen ist. Die Durchgänge 26, 27, 28 der Scheibe 21 sind entsprechend dem Drehwinkel dieser Scheibe gegenüber den Durchgängen 23-25 und 29-32 der feststehenden Scheiben 19 bzw. 20 vergrößert.

Wie bereits erwähnt, ist die dargestellte und beschriebene Ausführung nur ein Beispiel zur Verwirklichung der Erfindung, und diese ist nicht darauf beschränkt, vielmehr sind im Rahmen des erfindungsgemäßen Grundgedankens insbesondere hinsichtlich der Gestaltung und Anordnung der einzelnen Teile auch noch andere Möglichkeiten gegeben. So könnte statt des Drehringes 7 auch ein Wipp- oder Schiebeschalter Verwendung finden. Das Batteriegehäuses 1 müßte dann einen entsprechenden Durchbruch aufweisen. Ferner könnte der zusätzliche Durchgang des Wasserventiles 3 auch mit Misch- oder Heißwasser beaufschlagt werden und es könnten mehrere zusätzliche Durchgänge für den Anschluß mehrerer Haushaltsmaschinen vorgesehen sein. Zwischen den Durchgängen 30, 32 befindet sich ein Trennsteg 35, wobei die obere Stegfläche 36' als Dichtfläche ausgebildet ist, welche mit dem unteren Dichtflächenbereich 36" der beweglichen Scheibe 21 zusammenwirkt. Im übrigen sind mindestens die einander zugewandten Flächen der keramischen Scheiben 19, 21, 20 poliert, und sie bilden Dichtflächen 36. Wie ferner ersichtlich, weisen die Scheiben 19, 20 Ausnehmungen 37 auf, in die Vorsprünge 38 der Kartusche 6 zwecks Lagesicherung eingreifen. Die Ausnehmung 39 der beweglichen Scheibe 21 korrespondiert mit einem entsprechenden Vorsprung 40 des Drehringes 7. Die Durchbrüche 41 und 42 in den Scheiben 20 und 21 sowie die Ausnehmung 43 der Scheibe 19 dienen zur Aufnahme eines Lagerstiftes 44 für die Drehbewegung der Scheibe 21. Schließlich könnte eine erfindungsgemäße Mischbatterie mittels des Wasserventiles auch für eine Bade-Brause-Umschaltung Verwendung finden oder für den Anschluß einer Munddusche an das Wasserventil bei einer Ausführung als Waschtisch-Batterie. Ein erfindungsgemäßes Wasserventil könnte außerdem ein direkter Bestandteil der Mischkartusche 1' sein. In diesem Fall würde man auf die obere feststehende Scheibe 19 verzichten, da die Funktion dieser Scheibe zusätzlich von der unteren feststehenden Ventilsitzscheibe 45 der Mischkartusche 1' übernommen werden könnte. Bei einer solchen Konstruktion würden also die Funktionen der Mischkartusche 1' und die des Wasserventils 3 baueinheitlich in nur einem Kartuschengehäuse vereinigt sein, was eine geringere Bauhöhe zur Folge hätte. Dabei würde der Kartuschenboden 17 nebst Dichtungen entfallen, dessen Funktion der Boden der Mischkartusche 1' mit seinen Dichtungen übernehmen würde.

**Patentansprüche**

1. Mischbatterie, insbesondere Einhebelmischbatterie für Spültische oder dgl., mit einem Batteriegehäuse, in dem ein mit einem Anschlußröhrchen (13) für das warme Wasser, einem Anschlußröhrchen (12) für das kalte Wasser und mindestens einem Anschlußröhrchen (14) für den Anschluß einer Haushaltsmaschine versehenes Einsatzstück (10) angeordnet ist, welches mit einer Mischkartusche (1') mit einem unteren Kalt- und Warmwasserzulauf und mit einem unteren Mischwasserabgang sowie mit einem Wasserventil (3) für den Anschluß der Haushaltsmaschine in Verbindung steht und mit diesem in dem Batteriegehäuse angeordnet ist, wobei für die Betätigung des Wasserventiles ein am Umfang der Mischbatterie befindliches Betätigungsorgan (7) vorgesehen ist, dadurch gekennzeichnet, daß das Wasserventil zwischen der Mischkartusche (1') und dem Einsatzstück (10) angeordnet ist und mit einer oberen feststehenden Scheibe (19), einer unteren feststehenden Scheibe (20) und einer mittleren beweglichen Scheibe (21), durch die in Verbindung mit einem zusätzlichen Durchgang (32) in der unteren feststehenden Scheibe die Steuerung der Wasserzufuhr zu der Haushaltsmaschine erfolgt, versehen ist.

2. Sanitäre Mischbatterie nach Anspruch 1, dadurch gekennzeichnet, daß das Wasserventil (3) als Kartusche ausgebildet oder Bestandteil der Mischkartusche (1') ist.

3. Sanitäre Mischbatterie nach den Ansprüchen 1 und 2, dadurch gekennzeichnet, daß die Durchgänge (23, 24, 25, 26, 27, 28, 29, 30, 31, 32) etwa kreissegmentförmig oder dreieckig sind.

4. Sanitäre Mischbatterie nach einem oder mehreren der vorstehenden Ansprüche, dadurch gekennzeichnet, daß die Durchgänge (30, 32) der unteren Scheibe (20) durch einen Steg (35) voneinander getrennt sind, wobei mindestens die obere Stegfläche (36') als Dichtfläche ausgebildet ist, die mit dem unteren Dichtflächenbereich (36") der beweglichen Scheibe (21) zusammenwirkt.

5. Sanitäre Mischbatterie nach den Ansprüchen 1 bis 3, dadurch gekennzeichnet, daß die Durchgänge (23 bis 25) in der oberen feststehenden Scheibe (19) des Wasserventils den Zuläufen sowie dem Abgang der Mischkartusche (1) und die Durchgänge (29 bis 32) in der unteren feststehenden Scheibe (20) den Zuläufen sowie den Abgängen des Einsatzstückes (10) zugeordnet sind.

6. Sanitäre Mischbatterie nach den Ansprüchen 1 bis 5, dadurch gekennzeichnet, daß die mittlere Scheibe (21) des Wasserventiles von einem Drehring (7) umgeben und durch diesen beweglich ist, wodurch der Durchgang (32) absperr- bzw. öffenbar ist.

7. Sanitäre Mischbatterie nach den Ansprüchen 1 bis 6, dadurch gekennzeichnet, daß die Kartusche (3) aus der oberen feststehenden Scheibe (19), der mittleren beweglichen Scheibe (21), der unteren feststehenden Scheibe (20), einem Kartuschengehäuse (6), einem Kartuschenboden (17) und dem Drehring (7) als Teil des Kartuschengehäuses besteht.

8. Sanitäre Mischbatterie nach einem oder mehreren der vorstehenden Ansprüche, dadurch gekennzeichnet, daß die Durchgänge (26, 27, 28) in der beweglichen Scheibe (21) entsprechend dem Drehwinkel dieser Scheibe gegenüber den Durchgängen (23 bis 25, 29 bis 32) der feststehenden Scheiben (19, 20) vergrößert sind.

9. Sanitäre Mischbatterie nach Anspruch 2 und einem oder mehreren der vorstehenden Ansprüche, dadurch gekennzeichnet, daß das Wasserventil (3) direkter Bestandteil der Mischkartusche (1') ist, deren untere Ventilsitzscheibe (45) gleichzeitig die obere feststehende Scheibe des Wasserventiles (3) bildet, dessen untere feststehende Scheibe (20) auf dem Boden (1") der Mischkartusche (1') ruht, die über Dichtungen (4,5) an das Einsatzstück (10) angeschlossen ist.

## Claims

1. Mixing tap, more particularly single-lever mixing tap for sinks or the like, having a tap housing in which there is arranged an insert (10) which is provided with a connection pipe (13) for the hot water, a connection pipe (12) for the cold water and at least one connection pipe (14) for the connection of a household appliance, the insert communicating with a mixing cartridge (1') with a lower cold and hot water intake and a lower mixed water outflow and also with a water valve (3) for the connection of the household appliance and being arranged with the valve in the tap housing, an actuating mechanism (7) located at the periphery of the mixing tap being provided for the actuation of the water valve, characterised in that the water valve is arranged between the mixing cartridge (1') and the insert (10) and is provided with an upper fixed disc (19), a lower fixed disc (20) and a central movable disc (21) by means of which, in conjunction with an additional passage (32) in the lower fixed disc, control of the water feed to the household appliance takes place.

2. Sanitary mixing tap according to claim 1, characterised in that the water valve (3) is formed as a cartridge or is part of the mixing cartridge (1').

3. Sanitary mixing tap according to claims 1 and 2, characterised in that the passages (23, 24, 25, 26, 27, 28, 29, 30, 31, 32) are substantially circularsegment-shaped or triangular.

4. Sanitary mixing tap according to one or several of the preceding claims, characterised in that the passages (30, 32) of the lower disc (20) are separated from each other by means of a bar (35), with at least the upper bar face (36') being formed as a sealing surface which cooperates with the lower sealing surface area (36") of the moveable disc (21).

5. Sanitary mixing tap according to claims 1 to 3, characterised in that the passages (23 to 25) in the upper fixed disc (19) of the water valve are coordinated with the intakes and also the outflow of the mixing cartridge (1) and the passages (29 to 32) in the lower fixed disc (20) are coordinated with the intakes and also the outflows of the insert (10).

6. Sanitary mixing tap according to claims 1 to 5, characterised in that the central disc (21) of the water valve is surrounded by a rotary ring (7) and can be moved by the latter, whereby the passage (32) can be shut off or opened.

7. Sanitary mixing tap according to claims 1 to 6, characterised in that the cartridge (3) consists of the upper fixed disc (19), the central moveable disc (21), the lower fixed disc (20), a cartridge housing (6), a cartridge base (17) and the rotary ring (7) as part of the cartridge housing.

8. Sanitary mixing tap according to one or several of the preceding claims, characterised in that the passages (26, 27, 28) in the movable disc (21) are enlarged in accordance with the angle of rotation of this disc in relation to the passages (23 to 25, 29 to 32) of the fixed discs (19, 20).

9. Sanitary mixing tap according to claim 2 and one or several of the preceding claims, characterised in that the water valve (3) is a direct component part of the mixing cartridge (1'), the lower valve seat disc (45) of which simultaneously forms the upper fixed disc of the water valve (3), the lower fixed disc (20) of which rests on the base (1") of the mixing cartridge (1') which is connected to the insert (10) by way of seals (4, 5).

## Revendications

1. Mitigeur, en particulier mitigeur à manette unique pour éviers ou analogues, comportant un corps dans lequel est inséré un bloc groupant une tubulure de raccordement (13) pour l'eau chaude, une tubulure de raccordement (12) pour l'eau froide et au moins une tubulure de raccordement (14) pour le branchement d'un appareil domestique, ce bloc inséré étant pourvu d'une cartouche mélangeuse (1') qui comporte à sa partie inférieure une entrée d'eau froide et une entrée d'eau chaude ainsi qu'une sortie pour l'eau mitigée, et qui est en communication avec une vanne de débit d'eau (3) pour le raccordement de l'appareil domestique, cette cartouche étant disposée avec cette vanne dans le corps du mitigeur, un organe de manœuvre (7) pour actionner la vanne de débit d'eau étant prévu sur le côté du mélangeur, caractérisé en ce que la vanne de débit d'eau est montée entre la cartouche mélangeuse (1') et le bloc (10) inséré dans le corps, cette vanne comportant un disque supérieur fixe (19), un disque inférieur fixe (20) et un disque intermédiaire mobile (21) qui permet, en combinaison avec un passage supplémentaire (32) ménagé dans le disque inférieur fixe, de régler le débit d'eau vers l'appareil domestique.

2. Mitigeur sanitaire selon la revendication 1, caractérisé en ce que la vanne de débit d'eau (3) est réalisée sous la forme d'une cartouche ou constitue une partie intégrante de la cartouche mélangeuse (1').

3. Mitigeur sanitaire selon l'une des revendications 1 et 2, caractérisé en ce que les passages (23, 24, 25, 26, 27, 28, 29, 30, 31, 32) ont sensiblement une forme en arc de cercle ou une forme triangulaire.

4. Mitigeur sanitaire selon l'une au moins des revendications précédentes, caractérisé en ce que les passages (30, 32) du disque inférieur (20) sont séparés l'un de l'autre par une bande (35) dont au moins la face supérieure (36') constitue une face d'étanchéité qui coopère avec la zone de la face d'étanchéité inférieure (36") du disque mobile (21).

5. Mitigeur sanitaire selon les revendications 1 à 3, caractérisé en ce que les passages (23 à 25) qui traversent le disque supérieur fixe (19) de la vanne de débit d'eau sont associés aux arrivées ainsi qu'au départ de la cartouche mélangeuse (1), et en ce que les passages (29 à 32) ménagés dans le disque inférieur fixe (20) sont associés aux arrivées ainsi qu'aux départs du bloc (10) inséré dans le corps.

6. Mitigeur sanitaire selon les revendications 1 à 5, caractérisé en ce que le disque intermédiaire (21) de la vanne de débit d'eau est entouré par un anneau tournant, par l'intermédiaire duquel on peut manœuvrer le disque, pour fermer ou ouvrir le passage (32).

7. Mitigeur sanitaire selon les revendications 1 à 6, caractérisé en ce que la cartouche (3) comprend le disque supérieur fixe (19), le disque intermédiaire mobile (21), le disque inférieur fixe (20), un corps de cartouche (6), un fond (17) et l'anneau tournant (7) qui constitue une partie du corps de la cartouche.

8. Mitigeur sanitaire selon l'une au moins des revendications précédentes, caractérisé en ce que les passages (26, 27, 28) ménagés dans le disque inférieur mobile (21) sont agrandis par rapport aux passages (23 à 25, 29 à 32) des disques fixes (19, 20), pour correspondre à l'angle de rotation du disque mobile.

9. Mitigeur sanitaire selon la revendication 2 et l'une au moins des revendications précédentes, caractérisé en ce que la vanne de débit d'eau (3) fait partie intégrante de la cartouche mélangeuse (1'), dont le disque fixe inférieur (45) constitue en même temps le disque fixe supérieur de la vanne de débit d'eau (3), le disque fixe inférieur (20) de cette vanne étant en appui sur le fond (1") de la cartouche mélangeuse (1') qui est raccordée par des joints (4, 5) au bloc (10) inséré dans le corps du mitigeur.

# Fig. 1

Schnitt VI-VI

## Fig. 2

Schnitt VII–VII

Fig. 3

Fig. 4

Schnitt IV-IV

## Fig. 5

38

## Fig. 6